# EUROPÄISCHE PATENTSCHRIFT

(11) **EP 2 959 106 B1**
(45) Veröffentlichungstag und Bekanntmachung des Hinweises auf die Patenterteilung: **10.05.2017**
(21) Anmeldenummer: 14708495.8
(22) Anmeldetag: 12.02.2014
(51) Int. Cl.: E21D 21/00

(54) **ANKERKOPF UND ANKERMUTTER FÜR EINEN ZUGANKER**
ANCHOR HEAD AND ANCHOR NUT FOR A TENSION ANCHOR
TÊTE D'ANCRAGE ET ÉCROU D'ANCRAGE POUR UN TIRANT D'ANCRAGE

(30) Priorität: 19.02.2013 DE 102013002734
(43) Veröffentlichungstag der Anmeldung: 30.12.2015
(73) Patentinhaber: FIREP Rebar Technology GmbH, 40549 Düsseldorf (DE)
(72) Erfinder: TSUKAMOTO, Kenichi, 40667 Meerbusch (DE)
(74) Vertreter: Schrooten, Rolf
(86) Internationale Anmeldenummer: PCT/EP2014/052757
(87) Internationale Veröffentlichungsnummer: WO 2014/128043

(56) Entgegenhaltungen:
- AU-B2- 693 500
- CN-A- 102 359 470
- DE-A1-102010 024 352
- US-A- 5 525 013
- US-A- 5 570 976

## Beschreibung

Die vorliegende Erfindung betrifft einen Ankerkopf nach dem Oberbegriff von Anspruch 1 sowie eine Ankermutter nach dem Oberbegriff von Anspruch 13. Der Ankerkopf dient zur Verankerung eines Zugankers an der Luftseite einer Ankerbohrung und umfasst dazu eine Ankermutter und eine mit dieser zusammenwirkende Ankerplatte. Die Ankermutter ist dazu bestimmt, mittels einer in Richtung ihrer Längsachse verlaufenden Gewindebohrung auf ein Ankergewinde eines Zugankers aufgeschraubt zu werden. Die Ankerplatte wird zuvor mittels einer Ankerplattenöffnung auf das luftseitige freie Ende eines in ein Ankerloch eingebrachten Zugankers aufgesteckt und dann durch die aufgeschraubte Ankermutter beaufschlagt. Sie ist dabei dazu bestimmt, die von dem Zuganker auf die Ankermutter ausgeübten Zugkräfte auf den die Ankerbohrung umgebenden Untergrund zu übertragen.

Derartige Ankerköpfe und Zuganker sowie ihre Verwendung sind bekannt. Sie dienen im Allgemeinen dazu, mehrere Schichten des Untergrunds miteinander zu verbinden und Kräfte, die im oberflächennahen Bereich des Untergrunds zu Instabilitäten führen können, in tiefer liegende Untergrundschichten einzuleiten, welche ausreichend große Rückhaltekräfte aufnehmen können. Zuganker werden dabei überwiegend als Felsanker in den untertägigen Tunnelstrecken des Bergbaus, z. B. in Steinkohlebergwerken eingesetzt. Aufgrund der dort räumlich meist sehr beengten Verhältnisse werden Felsanker oftmals als Klebeanker in drehbohrend hergestellten Bohrlöchern versetzt. Während der Vortriebsarbeiten werden sie überwiegend zur temporären Sicherung von Ortsbrust, von Teilen der Firste und insbesondere zur Sicherung der Stöße im Bereich des Minerals / Kohleflözes verwendet. Des weiteren können derartige Zuganker auch als Endverankerung auf Bewehrungsstäben für Anwendungen in Beton eingesetzt werden.

Ein solcher Zuganker ist beispielsweise aus der DE 198 28 371 A1 bekannt, auf die für weitere Einzelheiten, insbesondere auch zum Einsatz und zur Herstellung verwiesen wird.

Weiterhin ist es bei derartigen Ankerköpfen für Zuganker beispielsweise aus der DE 20 2008 003 381 U1 bekannt, die Ankermutter mit einem konusförmigen Auflagebereich auszubilden, mit dem sie im montierten Zustand in die Ankerplattenöffnung der Ankerplatte eingreift und dort an einem komplementären Innenkonus aufliegt, den die Ankerplatte zumindest im Bereich dieser Ankerplattenöffnung aufweist.

Ferner ist aus der AU 693 500 B2 ein Ankerkopf bekannt, bei dem neben einer auf einen Anker aufgeschraubten Ankermutter ein Konuselement vorgesehen ist, welches von der Ankermutter in einen Innenkonus eines an einer Ankerplatte anliegenden Kragenelements hineingedrückt wird. Dabei ist die Wandung des Konuselements über einen Teilbereich ihrer axialen Erstreckung durch mindestens einen Schlitz unterbrochen, der am luftseitigen oder am erdseitigen Ende des Konuselements münden kann.

Aus der AT 135 919 B ist eine Ankermutter bekannt, deren Wandung an einer Stelle über die gesamte Höhe der Ankermutter durch einen Schlitz unterbrochen ist.

Zur Erhöhung der Tragfähigkeit und zur Erzielung höherer Festigkeitswerte ist es darüber hinaus auch bekannt, die Ankermutter mit mindestens einem vorzugsweise achsparallel verlaufenden Schlitz zu versehen, der die Mutterwandung über einen Teilbereich ihrer axialen Erstreckung unterbricht. Ein derartiger gattungsgemäßer Ankerkopf mit einem zugehörigen Zuganker ist aus der DE 10 2010 024 352 A1 bekannt. Gleichwohl ist eine noch weitergehende Steigerung der Tragfähigkeit und Festigkeit des Zugankers wünschenswert.

Aufgabe der vorliegenden Erfindung ist es daher, einen preiswert herzustellenden und leicht handhabbaren Ankerkopf der eingangs genannten Art bereitzustellen, der bei einfacher Konstruktion eine noch höhere Tragfähigkeit und verbesserte Festigkeitswerte bei der Verankerung erreicht. Ferner soll eine Ankermutter für einen derartigen Ankerkopf bereitgestellt werden.

Diese Aufgabe wird erfindungsgemäß durch einen Ankerkopf nach Anspruch 1 sowie durch eine Ankermutter nach Anspruch 13 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass der mindestens eine Schlitz an dem luftseitigen Ende der Ankermutter mündet, und dass er sich von dort ausgehend über eine Länge erstreckt, die zwischen 25% und 90%, vorzugsweise zwischen 30% und 88% und besonders bevorzugt zwischen 50% und 85% der gesamten axialen Länge der Ankermutter beträgt.

Im Gegensatz zu den bisher bekannten Ankerköpfen befindet sich der die Mutterwandung unterbrechende Schlitz nicht an dem untergrundseitigen Ende der Ankermutter, sondern an ihrem luftseitigen Ende, wobei er sich nicht über die gesamte Länge der Ankermutter erstreckt.

Hierdurch können gegenüber den bisher bekannten Ausführungsformen nochmals verbesserte Spannungsverteilungen innerhalb des Ankerkopfs und aufgrund der besseren Kraftübertragung von der Ankermutter auf den Zuganker weiter gesteigerte Traglasten und Festigkeitswerte erreicht werden.

Mit aktiver axialer Auflastung durch Anspannen der Ankermutter oder mit passiver Auflastung durch Konvergenzerscheinungen aus dem geankerten Untergrund wird der Zuganker mit der aufgeschraubten Ankermutter zunehmend tiefer in den Innenkonus der Ankerplatte gezogen, so dass eine erste, radial wirkende Pressung eine zunächst elastische Verformung im untergrundseitigen, nicht geschlitzten Bereich des Mutternkonus erzwingt, die zu einer weiteren axialen Traglasterhöhung der Ankermutter führt.

Bei weiterer axialer Laststeigerung beziehungsweise weiterer Belastung auf Zug im Ankerschaft wird die radial wirkende Pressung weiter erhöht und führt somit zu weiterer elastischer und überlagernd auch zu plastischer Verformung des Mutternkonus, die sich nun über die axiale Länge der Ankermutter in Richtung zu dem geschlitzten Bereich ausdehnt. Hier steigt der Verformungswiderstand der Ankermutter gegen die radiale Pressung trotz zunehmenden Durchmessers im Außenkonus nicht weiter mit an, sondern aufgrund der erfindungsgemäß in diesem luftseitigen Bereich angeordneten Schlitze erfolgt insgesamt eine Vergleichmäßigung der spezifischen Flächenpressung durch den Innenkonus der Ankerplatte auf die gesamte Oberfläche des Mutternkonus, wodurch die Lastkapazität der Ankermutter erheblich gesteigert wird. Alle Gewinderippen der Ankermutter werden dann in nahezu gleichem Maße zur Kraftübertragung herangezogen, was bei den vorbekannten Ankermuttern mit untergrundseitig angeordneten Schlitzen nicht der Fall ist.

Aufgrund der einfachen Konstruktionsweise kann der erfindungsgemäße Ankerkopf kostengünstig hergestellt werden. Auch kann der Ankerkopf bei seinem Einsatz leicht gehandhabt werden.

In vorteilhafter Weise ist die Mutterwandung in dem untergrundseitigen Bereich des konusförmigen Auflagebereichs, der mit dem kleineren Durchmesser zum Bohrlochtiefsten zeigt, über den gesamten Umfang ohne Unterbrechung durchgehend ausgebildet.

Dabei ist gemäß einer bevorzugten Ausführungsvariante vorgesehen, dass die Umfangsbereiche der Mutterwandung, welche in der Verlängerung des Schlitzes bzw. der Schlitze verbleiben, als Sollbruchstelle(n) ausgebildet sind, die bei Überschreiten einer vorbestimmten Belastung bricht bzw. brechen.

Besonders vorteilhaft ist es, wenn die Ankermutter mehrere Schlitze aufweist, die umfangsmäßig gleichmäßig verteilt sind. Vorzugsweise sind dabei zwei bis sechs Schlitze vorgesehen, die sich jeweils paarweise gegenüberliegen.

Besonders günstig ist es ferner, wenn der geschlitzte Bereich am luftseitigen Ende der Ankermutter beim Anspannen des Zugankers durch Eindringen des konusförmigen Auflagebereichs der Ankermutter in den Innenkonus der Ankerplatte derart nach innen zusammengedrückt wird, dass sich nicht nur das axiale Gewindespiel, sondern auch das radiale Gewindespiel zwischen dem Zuganker und der Ankermutter verringert oder sogar vollständig aufgehoben wird. Hierdurch können einerseits maximale Traglasten und Festigkeitswerte des Ankersystems und andererseits schlupffreie Festlegungen z.B. auch von Bewehrungsstäben in Betonanwendungen erzielt werden.

Gemäß einer vorteilhaften Ausführungsform der Erfindung schließt sich an das luftseitige Ende des konusförmigen Auflagebereichs der Ankermutter ein Kopfbereich mit einer untergrundseitigen Anschlagfläche an, die zur Längsachse der Ankermutter in einem Winkel geneigt ist, der größer ist, als Winkel, in dem der konusförmige Auflagebereich zur Längsachse der Ankermutter geneigt ist. Die Anschlagfläche kann an der Ankerplatte in Anlage kommen und ein weiteres Einziehen des konusförmigen Bereichs der Ankermutter in die Ankerplatte erschweren oder verhindern.

Gemäß einer besonders bevorzugten Ausführungsform der Erfindung ist vorgesehen, dass sich an das luftseitige Ende des konusförmigen Auflagebereichs der Ankermutter ein Kopfbereich mit einem sprunghaft vergrößerten Durchmesser derart anschließt, dass die untergrundseitige Stirnfläche des Kopfbereichs eine senkrecht zur Längsachse der Ankermutter verlaufende Anschlagfläche bildet, die gegen eine komplementäre Anschlagfläche der Ankerplatte anschlagen kann, um durch diesen Formschluss ein weiteres Einziehen des konusförmigen Bereichs der Ankermutter in den Innenkonus der Ankerplatte zu verhindern. Hierdurch kann ein definierter Hub der axialen Bewegung der Ankermutter im Innenkonus der Ankerplatte und damit auch die Systemnachgiebigkeit definiert begrenzt werden.

Um die Ankermutter leicht mit einem Werkzeug aufschrauben zu können, kann sie in an sich bekannter Weise mit Formschlusselementen, vorzugsweise mit einem Außen-Sechskant ausgebildet sein, wobei die Formschlusselemente vorteilhafterweise im Bereich des Kopfbereichs mit dem vergrößerten Durchmesser angeordnet sind.

Besonders vorteilhaft ist es, wenn der sich untergrundseitig an den Kopfbereich der Ankermutter anschließende Bereich des konusförmigen Auflagebereichs Markierungen aufweist, die in der Form einer Skala und/oder als farbliche Markierungen ausgeführt sein können. Während des gesamten Auflastungsvorganges entwickelt der erfindungsgemäße Ankerkopf eine nahezu lineare Funktion im Kraft-Weg Diagramm, die als Indikator für den Belastungszustand im Ankerkopf und auch als Indikator für eine gegebenenfalls erfolgte Erstauflockerung (initiale Konvergenz) der oberflächennahen Gebirgsschichten genutzt werden kann. Das bedeutet insbesondere im Sinne der neuen Österreichischen Tunnelbauweise einen methodischem Vorteil im Erstausbau und ermöglicht ein besonders kostengünstiges, sehr effektives Monitoring.

Gemäß einer weiteren besonders bevorzugten Ausführungsform der Erfindung weist die Ankerplatte einen die Ankerplattenöffnung umgebenden Kragen auf, der ein Gehäuse für den darin ausgeformten Innenkonus bildet. Der Kragen kann sich auf einer oder in der Form eines Doppelkragens auf beiden Seiten der Ankerplatte erstrecken. Aus Gründen der Platzersparnis ist es aber besonders vorteilhaft ist, wenn sich der Kragen überwiegend oder sogar vollständig auf der untergrundseitigen Seite der Ankerplatte erstreckt und so in den luftseitigen Endbereich der Ankerbohrung eingesteckt werden kann. Die axiale Länge des Kragens beträgt dabei vorteilhafterweise ein Vielfaches, vorzugsweise das Dreifache bis Zehnfache der Dicke der Ankerplatte.

Besonders vorteilhaft ist es dabei, wenn der Kragen in einem separaten Einsatzelement ausgebildet ist, welches mit einem zylindrischen Kragenbereich in die Ankerplattenöffnung eingesetzt ist und mit einer von dem Kragenbereich nach außen vorstehenden Anlageschulter an der luftseitigen Oberfläche der Ankerplatte anliegt. Die luftseitige Oberfläche der Anlageschulter kann dabei vorteilhafterweise mit der untergrundseitigen Anschlagfläche des Kopfbereichs der Ankermutter in Kontakt kommen, wenn die Ankermutter um den maximal vorgesehenen Einrückweg in die Ankerplatte hineingezogen worden ist.

Von Vorteil kann es ferner sein, wenn mindestens eine der Kontaktflächen der Konuspaarung zwischen der Ankermutter und der Ankerplatte mit einer reibungsreduzierenden Beschichtung oder mit einem reibungsreduzierenden Einsatz, insbesondere mit einem Nyloneinsatz versehen ist. Hierdurch wird bei gleichem Drehmoment eine höhere Anspannung ermöglicht.

Besonders vorteilhaft ist es ferner, wenn die Ankermutter und/oder die Ankerplatte aus faserverstärktem Kunststoff, insbesondere aus Glasfaserverstärktem Kunststoff (GFK) bestehen. Je nach Anwendungsfall kann die Ankermutter und/oder die Ankerplatte aber auch aus einer Metalllegierung gefertigt sein. Die Ankerplatte ist vorteilhafterweise kreisrund ausgeführt, sie kann aber auch eckig, insbesondere quadratisch ausgebildet sein.

Gegenstand der vorliegenden Erfindung ist ferner eine Ankermutter für einen Ankerkopf der vorangehend beschriebenen Art. Die Ankermutter umfasst dabei einen Mutterkörper, der sich in axialer Längsrichtung zwischen einem luftseitigen Ende und einem untergrundseitigen Ende erstreckt. Der Mutterkörper weist eine in Längsrichtung verlaufende Gewindebohrung zum Aufschrauben auf ein Ankergewinde eines Zugankers und einen konusförmigen Auflagebereich auf, welcher mit dem den kleineren Durchmesser aufweisenden untergrundseitiger Bereich voran in eine Ankerplattenöffnung einer Ankerplatte einsteckbar ist, um dort im montierten Zustand mit einem komplementären Innenkonus zusammenzuwirken, den die Ankerplatte zumindest im Bereich ihrer Ankerplattenöffnung aufweist. Der größere Durchmesserbereich des konusförmigen Auflagebereichs ist dabei dem luftseitigen Ende der Ankermutter zugewandt. Die Ankermutter weist ferner mindestens einen vorzugsweise achsparallel verlaufenden Schlitz auf, der die Mutterwandung über einen Teilbereich ihrer axialen Erstreckung unterbricht, und der an dem luftseitigen Ende der Ankermutter mündet, von wo aus er sich über eine Länge erstreckt, die zwischen 25% und 90% der gesamten axialen Länge der Ankermutter beträgt.

Im übrigen kann die Ankermutter vorteilhafterweise mit weiteren Merkmalen des Ankerkopfs der vorangehend beschriebenen Art ausgebildet sein.

Weitere Vorteile und Merkmale der Erfindung ergeben sich aus der nachfolgenden Beschreibung und den in den Zeichnungen dargestellten Ausführungsbeispielen. Es zeigen:
- Figur 1:: Querschnitt durch eine erste Ausführungsform eines erfindungsgemäßen Ankerkopfs;
- Figur 2:: Aufsicht des Ankerkopfs aus Figur 1;
- Figur 3:: Querschnitt durch eine zweite Ausführungsform eines erfindungsgemäßen Ankerkopfs;
- Figur 4:: Querschnitt durch eine dritte Ausführungsform eines erfindungsgemäßen Ankerkopfs; und
- Figur 5:: Zuganker mit dem Ankerkopf aus Figur 3 in gesetztem Zustand.

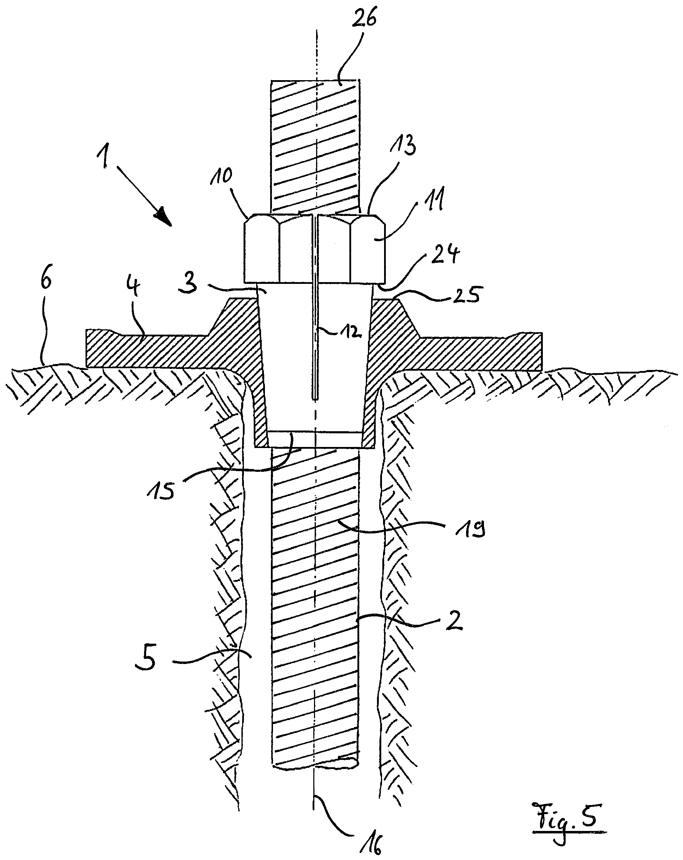

In Figur 5 ist ein Ausführungsbeispiel eines mit einem erfindungsgemäßen Ankerkopf 1 versehenen Zugankers 2 dargestellt, bei dem der Zuganker 2, die Ankermutter 3 und die Ankerplatte 4 jeweils vollständig aus Faserverbundwerkstoff bestehen. Der Zuganker 2 ist hier als Felsanker in eine Ankerbohrung 5 eingesetzt und dort im Bohrlochtiefsten in an sich bekannter Weise, etwa durch Klebepatronen festgelegt (nicht zeichnerisch dargestellt). Die vom Zuganker 2 ausgeübten Zugkräfte werden über die aufgeschraubte Ankermutter 3 auf die hiermit zusammenwirkende Ankerplatte 4 übertragen, die sich an dem das luftseitige Ende der Ankerbohrung 5 umgebenden Untergrund 6 abstützt. Auf diese Weise werden die im Bereich der Ankerbohrung 5 liegenden oberflächennahen Schichten des hier aus Fels bestehenden Untergrunds 6 stabilisiert.

Der Körper der Ankermutter 3 weist einen konusförmigen Auflagebereich 7 auf, der im montierten Zustand in die Ankerplattenöffnung 8 der Ankerplatte 4 eingreift. Dort liegt der konusförmige Auflagebereich 7 der Ankermutter 3 an einem komplementären Innenkonus 9 auf, den die Ankerplatte 4 als Umfangswand der Ankerplattenöffnung 8 aufweist. Sowohl der konusförmige Auflagebereich 7 als auch der Innenkonus 9 sind hier selbsthemmend mit einem Konus-Winkel von 7,5° ausgeführt.

An das luftseitige Ende des konusförmigen Auflagebereichs 7 schließt sich ein Kopfbereich 10 der Ankermutter 3 an, der für die Montage und zum Aufbringen der Vorspannung mit einem Außensechskant 11 versehen ist.

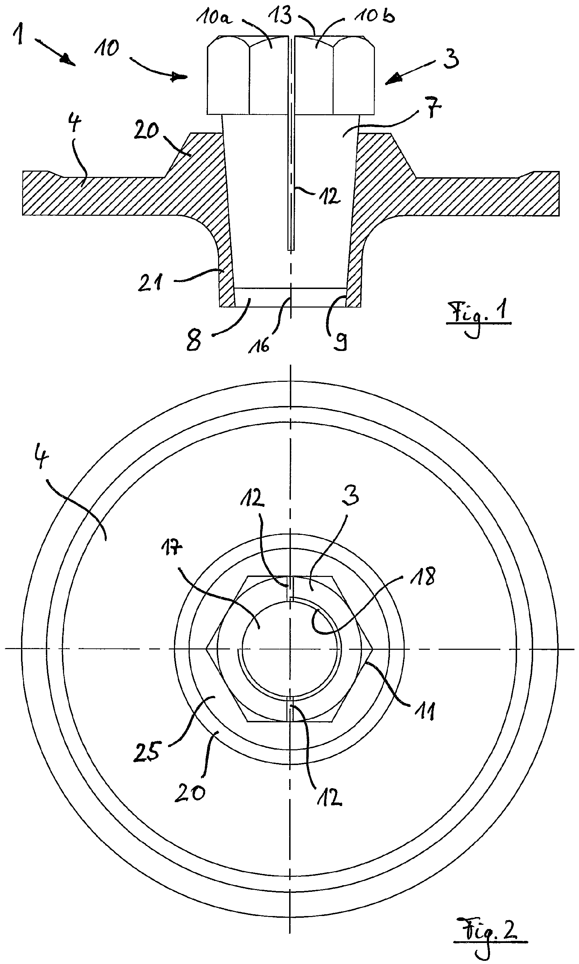

Zur Erhöhung der Tragfähigkeit und zur Erzielung höherer Festigkeitswerte weist die Ankermutter 3 zwei einander diametral gegenüberliegende, jeweils achsparallel verlaufende Schlitze 12 auf, welche die Mutterwandung jeweils über die Länge ihrer axialen Erstreckung unterbrechen. Erfindungsgemäß sind diese Schlitze 12 so angeordnet, dass sie an dem luftseitigen Ende 13 der Ankermutter 3 beginnen und in einem deutlichen Abstand 14 von dem untergrundseitigen Ende 15 der Ankermutter 3 enden. In den Ausführungsbeispielen der Figuren 1, 3 und 4 erstrecken sich die Schlitze 12 ausgehend von dem luftseitigen Ende 13 über eine Länge, die zwischen 80% und 85% der gesamten axialen Länge der Ankermutter 3 beträgt.

Die beiden Schlitze 12 trennen dabei den Kopfbereich 10 sowie einen überwiegenden Teil des konusförmigen Auflagebereichs 7 in zwei Segmente 10a und 10b. Nur das untergrundseitige Ende des konusförmigen Auflagebereichs 7 mit dem kleineren Durchmesser ist auf einer Höhe 14 von ca. 15% bis 20% der axialen Länge der Ankermutter 3 über den gesamten Umfang durchgehend ausgebildet.

In Richtung der Längsachse 16 ist die Ankermutter 3 mit einer durchgehenden Gewindebohrung 17 versehen, deren Innengewinde 18 dem wellenartigen Sondergewindeprofil 19 des Zugankers 2 angepasst ist. So kann die Ankermutter 3 zunächst bei geringem Spiel leicht auf den Zuganker 2 aufgeschraubt werden, wohingegen später bei radialer Pressung bzw. Klemmung des konusförmigen Auflagebereichs 7 in dem Innenkonus 9 das Innengewinde 18 der Ankermutter 3 spiel- und schlupffrei auf dem Gewinde 19 des Zugankers 2 festgelegt wird.

Die Ankerplatte 4 verfügt außen, also an der vom Untergrund 6 abgewandeten luftseitigen Oberfläche, über eine zentrische, hier kegelstumpfartig ausgebildete Erhöhung, die einen Kragen 20 bildet, welche zentriert die Ankerplattenöffnung 8 mit dem Innenkonus 9 umfasst. Auf der dem Untergrund 6 zugewandeten untergrundseitigen Oberfläche steht der Kragen 20 ebenfalls mit einem Bereich 21 vor, der im montierten Zustand in die Ankerbohrung 5 eingreift.

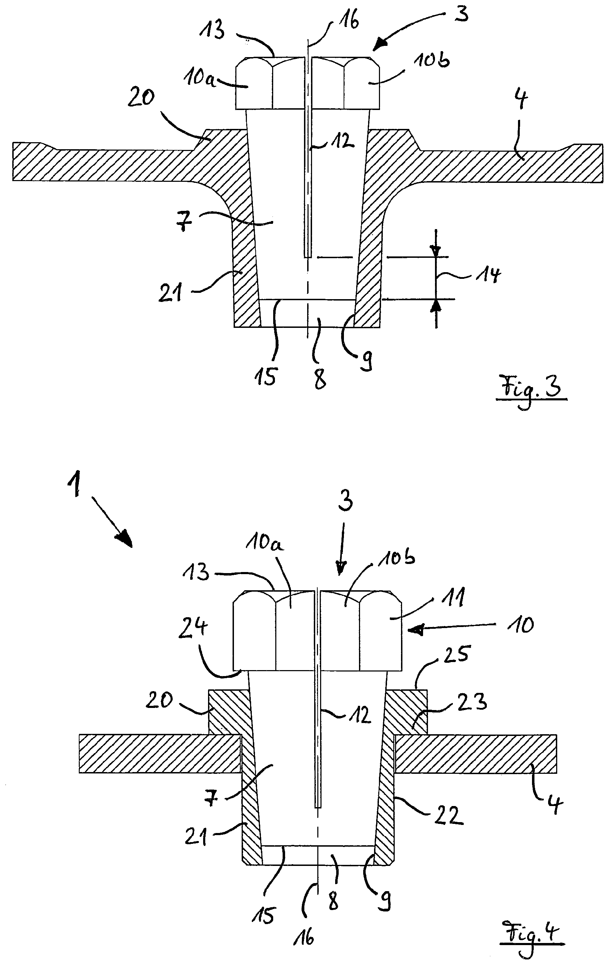

Dieser untergrundseitige Kragenbereich 21 kann dabei je nach Anwendungsfall unterschiedlich weit vorstehen (Figuren 1 und 3). Bei dem in Figur 4 dargestellten Ausführungsbeispiel ist der Kragen 20 einschließlich seines untergrundseitigen Bereichs 21 in einem separaten Einsatzelement 22 ausgebildet, das in die Ankerplattenöffnung 8 der Ankerplatte 4 eingesetzt ist. Hier liegt es mit einer von dem luftseitigen Kragen 20 radial nach außen vorstehenden Anlageschulter 23 an der luftseitigen Oberfläche der Ankerplatte 4 an.

Der Kopfbereich 10 der Ankermutter 3 weist einen sprunghaft vergrößerten Durchmesser auf, wodurch an der untergrundseitigen Stirnfläche des Kopfbereichs 10 eine senkrecht zur Längsachse 16 der Ankermutter 3 verlaufende Anschlagfläche 24 ausgebildet ist. Diese Anschlagfläche 24 kann gegen eine komplementäre Anschlagfläche 25 anschlagen, die auf der luftseitigen Oberfläche des Kragens 20 der Ankerplatte 4 ausgebildet ist. Durch diesen Formschluss wird dann ein weiteres Einziehen des konusförmigen Auflagebereichs 7 der Ankermutter 3 in den Innenkonus 9 der Ankerplatte 4 verhindert.

Bei der Montage des einzelnen Zugankers 2 wird der zweiteilige Ankerkopf 1, der aus der Ankermutter 3 und der Ankerplatte 4 besteht, auf dem Ankerschaftende 26 vormontiert und der Zugsanker 2 dann in der vorzugsweise mit Klebepatronen gefüllten Ankerbohrung 5 versetzt. Dabei kann die Ankermutter 3 nach Härten des Kunstharzes zunächst konventionell mittels Drehmoment angezogen und der Zuganker 2 so über den zweiteiligen Ankerkopf 1 angespannt werden.

Beim Anziehen der Ankermutter 3 läuft diese endseitig mit dem konusförmigen Auflagebereich 7 in den Innenkonus 9 der Ankerplatte 4. Das luftseitige Ende des konusförmigen Auflagebereichs 7 der Ankermutter 3 wird dabei aufgrund der Schlitzung 12 radial zusammengedrückt, wodurch das radiale Gewindespiel bereits jetzt zumindest nahezu vollständig aufgehoben wird, was zu einer Verklemmung der Ankermutter 3 in der Ankerplatte 4 führt. Das Innengewinde 18 verhindert dabei aufgrund des Formschlusses mit dem Außengewinde 19 des Zugankers 2 eine axiale Bewegung der Ankermutter 3.

## Patentansprüche

1. Ankerkopf (1) zur Verankerung eines Zugankers (2) an der Luftseite einer Ankerbohrung (5), umfassend
- eine Ankermutter (3) mit einer Gewindebohrung (17) zum Aufschrauben auf ein Ankergewinde (19) eines Zugankers (2), und
- eine mit der Ankermutter (3) zusammenwirkende Ankerplatte (4) mit einer Ankerplattenöffnung (8), die dazu bestimmt ist, die von einem eingeschraubten Zuganker (2) auf die Ankermutter (3) ausübbaren Zugkräfte auf einen die Ankerbohrung (5) umgebenden Untergrund (6) zu übertragen,
wobei die Ankermutter (3) einen konusförmigen Auflagebereich (7) aufweist, mit dem sie im montierten Zustand in die Ankerplattenöffnung (8) der Ankerplatte (4) eingreift und dort an einem komplementären Innenkonus (9) aufliegt, den die Ankerplatte (4) zumindest im Bereich der Ankerplattenöffnung (8) aufweist,
und wobei die Ankermutter (3) mindestens einen vorzugsweise achsparallel verlaufenden Schlitz (12) aufweist, der die Mutterwandung über einen Teilbereich ihrer axialen Erstreckung unterbricht,
**dadurch gekennzeichnet,**
**dass** der mindestens eine Schlitz (12) an dem luftseitigen Ende (13) der Ankermutter (3) mündet, und dass er sich von dort ausgehend über eine Länge erstreckt, die zwischen 25% und 90% der gesamten axialen Länge der Ankermutter (3) beträgt.

2. Ankerkopf (1) nach Anspruch **1,dadurch gekennzeichnet, dass** die Mutterwandung in dem untergrundseitigen Bereich (14) des konusförmigen Auflagebereichs (7) unterbrechungsfrei über den gesamten Umfang durchgehend ausgebildet ist.

3. Ankerkopf (1) nach Anspruch 1 oder 2, **dadurch gekennzeichnet, dass** die in Verlängerung des mindestens einen Schlitzes (12) verbleibenden Umfangsbereiche der Mutterwandung als Sollbruchstelle ausgebildet sind, die bei Überschreiten einer vorbestimmten Belastung bricht.

4. Ankerkopf (1) nach einem der Ansprüche 1 bis 3, **dadurch ge- kennzeichnet**, dass die Ankermutter (3) mehrere Schlitze (12), vorzugsweise zwei bis sechs Schlitze (12) aufweist, die gleichmäßig über den Umfang der Mutterwandung verteilt sind.

5. Ankerkopf (1) nach einem der vorherigen Ansprüche, **dadurch ge- kennzeichnet**, dass der geschlitzte Bereich am luftseitigen Ende (13) der Ankermutter (3) beim Verankern eines Zugankers (2) durch Eindringen des konusförmigen Auflagebereichs (7) in den Innenkonus (9) der Ankerplatte (4) nach innen zusammengedrückt wird, wobei sich das radiale und das axiale Gewindespiel zwischen dem Zuganker (2) und der Ankermutter (3) verringert.

6. Ankerkopf (1) nach einem der vorherigen Ansprüche, **dadurch ge- kennzeichnet**, dass sich an das luftseitige Ende des konusförmigen Auflagebereichs (7) der Ankermutter (3) ein Kopfbereich (10) mit einer untergrundseitigen Anschlagfläche (24) anschließt, die zur Längsachse (16) der Ankermutter (3) in einem Winkel geneigt ist, der größer ist als der Winkel, in dem der konusförmige Auflagebereich (7) zur Längsachse (16) der Ankermutter (3) geneigt ist.

7. Ankerkopf (1) nach einem der vorherigen Ansprüche, **dadurch gekennzeichnet, dass** sich an das luftseitige Ende des konusförmigen Auflagebereichs der Ankermutter (3) ein Kopfbereich (10) mit einem sprunghaft vergrößerten Durchmesser derart anschließt, dass die untergrundseitige Stirnfläche des Kopfbereichs (10) eine senkrecht zur Längsachse (16) der Ankermutter (3) verlaufende Anschlagfläche (24) bildet.

8. Ankerkopf (1) nach Anspruch 6 oder 7, **dadurch gekennzeichnet, dass** der sich an den Kopfbereich (10) der Ankermutter (3) anschließende Bereich des konusförmigen Auflagebereichs (7) eine Skala und/oder mindestens eine farbliche Markierung aufweist.

9. Ankerkopf (1) nach einem der vorherigen Ansprüche, **dadurch ge- kennzeichnet**, dass die Ankerplatte (4) einen die Ankerplattenöffnung (8) umgebenden Kragen (20) aufweist, in dem der Innenkonus (9) ausgebildet ist, wobei sich der Kragen (20) vollständig oder überwiegend auf der untergrundseitigen Seite der Ankerplatte (4) erstreckt.

10. Ankerkopf (1) nach Anspruch 9, **dadurch gekennzeichnet, dass** der Kragen (20) in einem separaten Einsatzelement (22) ausgebildet ist, welches mit einem zylindrischen Kragenbereich (21) in die Ankerplattenöffnung (8) der Ankerplatte (4) eingesetzt ist und mit einer von dem Kragenbereich (21) nach außen vorstehenden Anlageschulter (23) an der luftseitigen Oberfläche der Ankerplatte (4) anliegt.

11. Ankerkopf (1) nach einem der vorherigen Ansprüche, **dadurch ge- kennzeichnet**, dass mindestens eine der Kontaktflächen (7, 9) der Konuspaarung zwischen der Ankermutter (3) und der Ankerplatte (4) mit einer reibungsreduzierenden Beschichtung versehen ist.

12. Ankerkopf (1) nach einem der vorherigen Ansprüche, **dadurch ge- kennzeichnet**, dass die Ankermutter (3) und/oder die Ankerplatte (4) aus faserverstärktem Kunststoff bestehen.

13. Ankermutter (3) für einen Ankerkopf (1) zur Verankerung eines Zugankers (2) an der Luftseite einer Ankerbohrung (5), wobei die Ankermutter (3) einen Mutterkörper umfasst, der sich in axialer Längsrichtung (16) zwischen einem luftseitigen Ende (13) und einem untergrundseitigen Ende (15) der Ankermutter (3) erstreckt, und der eine in Längsrichtung (16) verlaufende Gewindebohrung (17) zum Aufschrauben auf ein Ankergewinde (19) eines Zugankers (2) und einen konusförmigen Auflagebereich (7) aufweist, dessen größerer Durchmesserbereich dem luftseitigen Ende (13) und dessen kleiner Durchmesserbereich dem untergrundseitigen Ende (15) der Ankermutter (3) zugewandt ist, wobei die Ankermutter (3) mindestens einen vorzugsweise achsparallel verlaufenden Schlitz (12) aufweist, der die Mutterwandung über einen Teilbereich ihrer axialen Erstreckung unterbricht,
**dadurch gekennzeichnet,**
**dass** der mindestens eine Schlitz (12) an dem luftseitigen Ende (13) der Ankermutter (3) mündet, und dass er sich von dort ausgehend über eine Länge erstreckt, die zwischen 25% und 90% der gesamten axialen Länge der Ankermutter (3) beträgt.

14. Ankermutter (3) nach Anspruch 13, **dadurch gekennzeichnet, dass** sie mit den Merkmalen nach mindestens einem der Ansprüche 2 bis 8 ausgebildet ist.

## Claims

1. An anchor head (1) for anchoring a tension anchor (2) on the air side of an anchor bore (5), comprising
- an anchor nut (3) with a threaded bore (17) for screwing onto an anchor thread (19) of a tension anchor (2), and
- an anchor plate (4) interacting with the anchor nut (3) with an anchor plate opening (8), which is intended to transmit the tensile forces that can be exerted on the anchor nut (3) by a screwed-in tension anchor (2) to a sub-surface (6) surrounding the anchor bore (5),
wherein the anchor nut (3) has a conical support region (7) with which in the assembled state it engages in the anchor plate opening (8) of the anchor plate (4) and there is supported on a complementary inner cone (9), which the anchor plate (4) has at least in the region of the anchor plate opening (8),
and wherein the anchor nut (3) comprises at least one slot (12) preferentially running axially parallel, which interrupts the nut wall over a part region of its axial extension,
**characterized**
**in that** the at least one slot (12) opens into the end (13) of the anchor nut (3) on the air side and in that starting out from there it extends over a length amounting to between 25% and 90% of the entire axial length of the anchor nut (3).

2. The anchor head (1) according to Claim 1, **characterized in that** the nut wall in the region (14) of the conical support region (7) on the sub-surface side is formed continuously without interruption over the entire circumference.

3. The anchor head (1) according to Claim 1 or 2, **characterized in that** the circumferential regions of the nut wall remaining in extension of the at least one slot (12) are formed as predetermined breakage point which breaks when a predetermined load is exceeded.

4. The anchor head (1) according to any one of the Claims 1 to 3, **characterized in that** the anchor nut (3) comprises multiple slots (12), preferentially two to six slots (12), which are evenly distributed over the circumference of the nut wall.

5. The anchor head (1) according to any one of the preceding claims, **characterized in that** the slotted region on the end (13) of the anchor nut (3) on the air side during the anchoring of a tension anchor (2) is compressed inwardly by the conical support region (7) entering the inner cone (9) of the anchor plate (4), wherein the radial and the axial thread play between the tension anchor (2) and the anchor nut (3) is reduced.

6. The anchor head (1) according to any one of the preceding claims, **characterized in that** the end of the conical support region (7) of the anchor nut (3) on the air side is followed by a head region (10) with a stop surface (24) on the sub-surface side, which with respect to the longitudinal axis (16) of the anchor nut (3) is inclined at an angle that is greater than the angle at which the conical support region (7) is inclined with respect to the longitudinal axis (16) of the anchor nut (3).

7. The anchor head (1) according to any one of the preceding claims, **characterized in that** the end of the conical support region of the anchor nut (3) on the air side is followed by a head region (10) with a suddenly enlarged diameter in such a manner that the end face of the head region (10) on the sub-surface side forms a stop surface (24) running perpendicularly to the longitudinal axis (16) of the anchor nut (3).

8. The anchor head (1) according to Claim 6 or 7, **characterized in that** the region of the conical support region (7) following the head region (10) of the anchor nut (3) comprises a scale and/or at least one colour marking.

9. The anchor head (1) according to any one of the preceding claims, **characterized in that** the anchor plate (4) comprises a collar (20) surrounding the anchor plate opening (8), in which the inner cone (9) is formed, the collar (20) completely or predominantly extending on the side of the anchor plate (4) on the sub-surface side.

10. The anchor head (1) according to Claim 9, **characterized in that** the collar (20) is formed in a separate insert element (22), which with a cylindrical collar region (21) is inserted into the anchor plate opening (8) of the anchor plate (4) and with a stop shoulder (23) protruding from the collar region (21) towards the outside abuts the surface of the anchor plate (4) on the air side.

11. The anchor head (1) according to any one of the preceding claims, **characterized in that** at least one of the contact surfaces (7, 9) of the cone pairing between the anchor nut (3) and the anchor plate (4) is provided with a friction-reducing coating.

12. The anchor head (1) according to any one of the preceding claims, **characterized in that** the anchor nut (3) and/or the anchor plate (4) consists of fibre-reinforced plastic.

13. An anchor nut (3) for an anchor head (1) for anchoring a tensioning anchor (2) on the air side of an anchor bore (5) wherein the anchor nut (3) comprises a nut body which extends in axial longitudinal direction (16) between an end (13) on the air side and an end (15) on the sub-surface side of the anchor nut (3), and which comprises a thread bore (17) running in longitudinal direction (16) for screwing onto an anchor thread (19) of a tension anchor (2) and a conical support region (7) the larger diameter region of which faces the end (13) of the anchor nut (3) on the air side and the small diameter region of which faces the end (15) of the anchor nut (3) on the sub-surface side, wherein the anchor nut (3) comprises at least one slot (12) preferentially running axially parallel, which interrupts the nut wall over a part region of its axial extension,
**characterized**
**in that** the at least one slot (12) opens into the end (13) of the anchor nut (3) on the air side and in that starting out from there it extends over a length amounting to between 25% and 90% of the entire axial length of the anchor nut (3).

14. The anchor nut (3) according to Claim 13, **characterized in that** it is formed with the characterizing features according to the at least one of the Claims 2 to 8.

## Revendications

1. Tête d'ancrage (1), destinée à ancrer un tirant d'ancrage (2) sur le côté air d'un trou d'ancrage (5), comprenant
- un écrou d'ancrage (3) avec un taraudage (17), destiné à être vissé sur un filetage d'ancrage (19) d'un tirant d'ancrage (2) et
- une plaque d'ancrage (4) coopérant avec l'écrou d'ancrage (3), avec un orifice (8) de plaque d'ancrage qui est destiné à transmettre sur un support (6) entourant le trou d'ancrage (5) les efforts de traction qui peuvent être exercés sur l'écrou d'ancrage (3) par un tirant d'ancrage (2) vissé
l'écrou d'ancrage (3) comportant une zone d'appui (7) de forme conique, par laquelle, lorsqu'il est monté, il s'engage dans l'orifice (8) de plaque d'ancrage de la plaque d'ancrage (4) et y repose sur un cône intérieur (9) complémentaire que la plaque d'ancrage (4) comporte au moins dans la zone de l'orifice (8) de plaque d'ancrage,
et l'écrou d'ancrage (3) comportant au moins une encoche (12) s'écoulant de préférence à la parallèle de l'axe, qui interrompt la paroi de l'écrou sur une zone partielle de son extension axiale,
**caractérisée en ce que**
l'au moins une encoche (12) débouche sur l'extrémité (13) sur le côté air de l'écrou d'ancrage (3) et **en ce qu'**en partant de là-bas, elle s'étend sur une longueur qui est comprise entre 25 % et 90 % de la longueur axiale totale de l'écrou d'ancrage (3).

2. Tête d'ancrage (1) selon la revendication 1, **caractérisée en ce que** la paroi d'écrou dans la zone (14) du côté support de la zone d'appui (7) de forme conique est conçue en continu, sans interruption sur toute la périphérie.

3. Tête d'ancrage (1) selon la revendication 1 ou la revendication 2, **caractérisée en ce que** les zones périphériques de la paroi d'écrou restant dans le prolongement de l'au moins une encoche (12) sont conçues en tant qu'endroit de rupture théorique qui se rompt au dépassement d'une contrainte prédéfinie.

4. Tête d'ancrage (1) selon l'une quelconque des revendications 1 à 3, **caractérisée en ce que** l'écrou d'ancrage (3) comporte plusieurs encoches (12), de préférence de deux à six encoches (12) qui sont régulièrement distribuées sur la périphérie de la paroi d'écrou.

5. Tête d'ancrage (1) selon l'une quelconque des revendications précédentes, **caractérisée en ce que** lors de l'ancrage d'un tirant d'ancrage (2), par pénétration de la zone d'appui (7) de forme conique dans le cône intérieur (9) de la plaque d'ancrage (4), la zone munie d'encoches sur l'extrémité (13) sur le côté air de l'écrou d'ancrage (3) est écrasée vers l'intérieur, alors que le jeu radial et axial du filet entre le tirant d'ancrage (2) et l'écrou d'ancrage (3) se réduit.

6. Tête d'ancrage (1) selon l'une quelconque des revendications précédentes, **caractérisée en ce qu'**à l'extrémité sur le côté air de la zone d'appui (7) de forme conique de l'écrou d'ancrage (3) se raccorde une zone de tête (10) avec une surface de butée (24) du côté du support, qui est inclinée par rapport à l'axe longitudinal (16) de l'écrou d'ancrage (3) sous un angle qui est supérieur à l'angle selon lequel la zone d'appui (7) de forme conique est inclinée par rapport à l'axe longitudinal (16) de l'écrou d'ancrage (3).

7. Tête d'ancrage (1) selon l'une quelconque des revendications précédentes, **caractérisée en ce qu'**à l'extrémité sur le côté air de la zone d'appui de forme coniquede l'écrou d'ancrage (3), une zone de tête (10) avec un diamètre agrandi brusquement se raccorde de telle sorte que la face frontale du côté du support de la zone de tête (10) forme une surface d'appui (24) s'écoulant à la perpendiculaire de l'axe longitudinal (16) de l'écrou d'ancrage (3).

8. Tête d'ancrage (1) selon la revendication 6 ou la revendication 7, **caractérisée en ce que** la zone de la zone d'appui (7) de forme conique qui se raccorde sur la zone de tête (10) de l'écrou d'ancrage (3) comporte une graduation et/ou au moins un marquage coloré.

9. Tête d'ancrage (1) selon l'une quelconque des revendications précédentes, **caractérisée en ce que** la plaque d'ancrage (4) comporte une collerette (20) entourant l'orifice (8) de plaque d'ancrage dans laquellele cône intérieur (9) est réalisé, la collerette (20) s'étendant complètement ou en majeure partie sur la face du côté du support de la plaque d'ancrage (4).

10. Tête d'ancrage (1) selon la revendication 9, **caractérisée en ce que** la collerette (20) est réalisée dans un élément d'insertion (22) séparé, lequel est placé par une zone de collerette (21) cylindrique dans l'orifice (8) de plaque d'ancrage de la plaque d'ancrage (4) et qui par un épaulement d'appui (23) saillant vers l'extérieur à partir de la zone de collerette (21) est adjacent à la surface sur le côté air de la plaque d'ancrage (4).

11. Tête d'ancrage (1) selon l'une quelconque des revendications précédentes, **caractérisée en ce qu'**au moins l'une des surfaces de contact (7, 9) de l'appariement conique entre l'écrou d'ancrage (3) et la plaque d'ancrage (4) est munie d'un revêtement réduisant le frottement.

12. Tête d'ancrage (1) selon l'une quelconque des revendications précédentes, **caractérisée en ce que** l'écrou d'ancrage (3) et/ou la plaque d'ancrage (4) sont composés de matière plastique renforcée par fibres.

13. Écrou d'ancrage (3) pour une tête d'ancrage (1) destinée à ancrer un tirant d'ancrage (2) sur le côté air d'un trou d'ancrage (5), l'écrou d'ancrage (3) comprenant un corps d'écrou qui s'étend dans la direction longitudinale (16) axiale entre une extrémité (13) sur le côté air et une extrémité (15) du côté support de l'écrou d'ancrage (3) et qui comporte un taraudage (17) s'écoulant dans la direction longitudinale (16), destiné à être vissé sur un filetage d'ancrage (19) d'un tirant d'ancrage (2) et une zone d'appui (7) de forme conique dont la zone de plus grand diamètre fait face à l'extrémité (13) sur le côté air et dont la zone de plus petit diamètre fait face à l'extrémité (15) du côté du support de l'écrou d'ancrage (3), l'écrou d'ancrage (3) comportant au moins une encoche (12) s'écoulant de préférence à la parallèle de l'axe qui interrompt la paroi de l'écrou sur une zone partielle de son extension axiale,
**caractérisé en ce que**
l'au moins une encoche (12) débouche sur l'extrémité (13) sur le côté air de l'écrou d'ancrage (3) et **en ce qu'**en partant de là, elle s'étend sur une longueur qui est comprise entre 25 % et 90 % de la longueur axiale total de l'écrou d'ancrage (3).

14. Écrou d'ancrage (3) selon la revendication 13, **caractérisé en ce qu'**il est réalisé avec les caractéristiques selon au moins l'une quelconque des revendications 2 à 8.
